# EUROPEAN PATENT APPLICATION

(11) **EP 4 190 157 A1**
(43) Date of publication of application: **07.06.2023**
(21) Application number: 21306678.0
(22) Date of filing: 01.12.2021
(51) Int. Cl.: A21D 2/36, A23J 1/14, A23J 3/14

(54) **A METHOD TO OBTAIN A PROTEIN-RICH LUPIN FLOUR, A PROTEIN-RICH LUPIN FLOUR AND ITS USES THEREOF**

(71) Applicant: Avril, 75008 Paris (FR)
(72) Inventor: The designation of the inventor has not yet been filed
(74) Representative: LLR

(57) **Abstract**

The invention relates to a process for producing a protein-rich lupin flour, said process comprising the successive steps of a) washing a lupin flour by mixing it with an acidic aqueous liquid, and adjusting the pH below 6, to obtain a aqueous-washed lupin flour; and b) washing said aqueous-washed lupin flour by mixing it with an alcohol at least one time, to obtain an alcohol-washed lupin flour. The invention further to a protein-rich lupin flour, wherein said protein-rich lupin flour comprises at least 45% DM w/w of proteins and at least 20% DM w/w of total fibres and may have a white or off white colour determined in the colour space CIELAB (1976) by a b* value of less than 18, preferably less than 17.4, preferably less than 15.0 and more preferably less than 12.0.

## Description

### FIELD OF THE INVENTION

This invention relates to a protein-rich lupin flour, to its uses in foods as well as to a process for its manufacture.

### PRIOR ART

Lupins are members of the legume family Fabaceae and their beans comprise proteins, fibers from the primary cell wall, oil and carbohydrates. The protein and fiber components of lupin beans possess properties that make them potentially useful as food additives and stock feed ingredients. However, these components have had limited use in the past due to problems with intense yellow colour and off flavours which adversely affected the foods to which they were added. Thus, although large amounts of lupins are produced the material is primarily used as a whole or yolk egg substitute in bakery, in animal feed or simply "ploughed".

To remediate these problems, a large amount of work has been carried out in order to produce protein concentrates and isolates from lupin beans. Proteins were generally seen as of primary value, and any other components undesirable. For examples, S. Bader et al. / LWT - Food Science and Technology 44 (2011) 1396-1404 describe how to obtain isolates of lupin storage protein fractions by isoelectric precipitation of alkali supernatants. In Blaicher F.M. et al., JAOCS 58 (1981) A761-A765, concentrates of at least 64.8 wt % on dry matter where obtained by deoilling lupin flakes with n-hexane and extracting three to five times with ethanol or methanol. As can be seen from comprehensive reviews such as Lo et al. "Lupin protein: isolation and techno-functional properties, a review"; Food Hydrocolloids 112 (2021) 106318 and the thesis entitled "Characterisation of functional and sensory properties of lupin proteins" (2013) from Stephanie Mittermaier (Friedrich- Alexander Universitat, Erlangen-Nurnberg), the focus of extraction technology is to obtain high protein content isolates and/or concentrates, generally by precipitation, with as little as possible of the original food matrix.

In WO2005002355A1 various fibrous by-products having a low protein contents (i.e. less than 8% w/w) resulting from successive alkali, acid and alcoholic protein extractions are used as food additives. The acid wash (pH 3) is used to separate the soluble and insoluble fibres in order to result in highly processed fibre concentrates.

As there are increased demands for lupin bean protein-rich compositions having particular profiles in terms of organoleptic characteristic (e.g. taste, flavour, colour), higher fibre content, acceptable amounts of fat and/or phytate and/or polyphenols and/or oligosaccharides, increased or enhanced water holding capacity, digestibility, emulsifying capacity, solubility, including nitrogen solubility profile; there is a need for a protein-rich lupin flour having at least one, and preferably many, of these desirable characteristics as well as for a process suitable for preparing such a protein-rich flour on an industrial scale and/or providing a high yield of protein at limited costs preferably without the use of hexane and/or a non-polar solvent.

Providing a protein-rich lupin flour having a high protein content as well as a medium-to-high total fiber content is another aim of the invention. This combination is particularly desirable because fibres are usually under-represented in human nutrition. A high-fibre and high-protein diet is linked to reduced risks of metabolic syndromes and is associated with several health benefits.

Due to the great number of goals to reach, optimising a purification process to obtain a cost effective method and a quality product has proven to be most difficult and challenging.

### DESCRIPTION OF THE INVENTION

It has now been found a process which can be applied directly to lupin bean flour, and preferably unprocessed flour of lupin beans, partially dehulled lupin beans or lupin kernels. It was surprisingly found that, despite a level of fat/oil which is well above 5% (w/w), lupin bean flour could be washed very effectively first with acidic water and then with an alcohol and produce a novel protein- and, preferably, fibre-, rich flour with several desirable features in terms of appearance, texture and/or an acceptable nutrient and/or organoleptic profile.

It is therefore an object of the invention to provide a protein-rich flour from lupin beans having at least one of the following characteristics, and preferably several:
- a colour which is a neutral and/or a light colour, especially not bright yellow, and preferably white, off white or beige;
- a low amount of phytate or phytic acid;
- a neutral flavour and, in particular, little or no, off flavours such as such as bitterness or a bean-like flavour;
- good texturing qualities and in particular, good protein solubility, water holding capacity (WHC) and/or gelling capacity and/or properties;
- a relatively high levels of total fibres;
- a low amount of polyphenols and alkaloids;
- being obtainable using the process of the invention;
- being suitable for applications in food or feed; and
- being hexane-free, and preferably free of non-polar solvents, that is having no traces of hexane / non-polar solvents, or in amounts well below the acceptable trace amount of these components, in its composition.

Thus, a protein-rich lupin flour combining high level of proteins and fibres, light-colour and preferably of neutral flavour is of particular interest.

Alternatively, or additionally, it is also an object of the invention to provide a process to obtain a concentrate of lupin beans proteins which is more environmentally friendly by consuming little energy, using green solvents and/or minimising the use and/or the amount of organic solvents.

Alternatively, or additionally, it is also an object of the invention to provide a process to obtain a concentrate of lupin bean proteins which is more environmentally friendly by using green solvents, such as water and alcohol, and/or by avoiding the use of hexane, and/or more generally, alkane and other non-polar solvents, such as, and in particular, benzene, toluene, diethyl ether, chloroform and/or 1,4-dioxane, and/or aprotic solvents such as ethyl acetate, THF, dichloromethane, acetone, MeCN, DMF and/or DMSO.

According to a first general aspect of the invention it is provided a process for producing a protein-rich lupin flour, said process comprising the successive steps of:
a) washing a lupin bean flour by mixing it with acidic aqueous liquid, and preferably adjusting the pH below 6, preferably from 4 and 5, to obtain a aqueous-washed lupin flour; and
b) washing said water-washed lupin flour by mixing it with an (solution of) alcohol at least one time, to obtain an alcohol-washed lupin flour.

### STARTING MATERIAL

In this specification the term "lupin" is directed to a plant belonging to the family Fabaceae and from the genus *Lupinus* such as blue lupin (*Lupinus angustifolius*); white lupin (L. *albus*); *L. mutabilis* ; *L. angustifolius*; *L. luteus*; which are preferred, in particular *L. albus.* New varieties of plant, or variants, obtained by crossbreeding or genetic modifications, are also encompassed by the term "lupin", which is used in its broadest possible sense as the process of the invention can be applied to the legume beans produced by member of the genus.

The expressions "lupin flour" and "lupin bean flour", are equivalent. They are as used in this specification to relate to a product originating from ground or milled raw lupin beans. The milling is usually carried out using a roller mill although a pin mill can be considered. The beans are usually completely dehulled (or decoated) (i.e. kernels or splits) but the expression "lupin flour" extends to milled hulled or "partially" dehulled beans. Processing steps of lupin bean dehulling are well known in the art. The dehulling step includes removing the hull from the lupin bean. The dehulling step produces a "dehulled lupin bean" or an lupin bean kernel. At the industrial scale, the dehulling is generally partial. By "partially dehulled lupin bean", it is meant that 10% w/w, preferably 50% w/w, more preferably 75% w/w, most preferably 90% w/w, even most preferably 95% w/w of the hull has been removed from the lupin bean. The lupin bean is preferably completely (*i.e.* fully) dehulled to avoid off-flavours.

Therefore, the use of fully dehulled lupin beans (*i.e.,* lupin kernels) as starting material is specifically encompassed by the invention. Kernels consist, or consist essentially of, fully dehulled lupin beans. This term encompasses the lupin splits. By "consist essentially" it is meant that the beans used are at least 95%, preferably 98% and more advantageously 99% kernels in weight percent over the total dry matter weight (%/DM w/w).

The lupin flour which is used in the process of the invention is not defatted especially using either hexane or any alkane More generally the lupin flour has advantageously not been contacted with benzene, toluene, diethyl ether, chloroform, 1,4-dioxane, ethyl acetate, THF, dichloromethane, acetone, MeCN, DMF and/or DMSO. Even more generally it is preferred that the lupin flour has not been contacted with non-polar solvents, and/or aprotic solvents. A lupin flour which has not been treated with any chemicals may also be preferably used as starting material and may be qualified as being organic. The lupin flour may also not have been pressed or extracted and more generally not have been submitted to physical treatment besides being milled or ground and eventually dehulled. Hence the lupin flour is advantageously "hexane-free", that is to say that it has less than 10 mg/kg, advantageously less than 5 mg/Kg and more preferably virtually no residual and/or trace amount of hexane (e.g. less than 1 mg/Kg). This quantification can also be applied to other non-polar or aprotic solvents.

The lupin flour which is used in the process of the invention is preferably not extracted with NaOH (sodium hydroxide), KOH (potassium hydroxide), or CaOH (calcium hydroxide) or more generally with a base or an alkali. Hence the lupin flour is advantageously "NaOH, KOH, CaOH or alkali- free. The lupin flour which is used in the process of the invention usually comprises naturally occurring fat or oil. Usually the proportion of fat within lupin flour is of about 5% (w/w) to 15% (w/w), usually from 8% (w/w) to 12% (w/w), for example about 10% (w/w).

The lupin flour which is used in the process of the invention comprises proteins which are usually present in a proportion of about 30% DM (w/w) to 50% DM (w/w), usually from 35% DM (w/w) to 45% DM (w/w), for example about 40% DM (w/w) of proteins.

Preferably, the lupin flour has a D90 (µm) average particle size ranging from 50µm to 1000µm, preferably from 200µm to 800µm, more preferably from 300µm and 700µm.

According to a variant of the invention, material other than a flour can be considered as a starting material. For examples flakes obtained by extrusion of, preferably dehulled, lupin beans could be used considered. In this case however the extrusion may be carried out so that the fat is not expelled in too high a quantity so that the starting lupin flakes still present a substantial amount of oil or fat.

### FIRST (ACIDIC AQUEOUS) WASH

According to the invention the lupin flour is washed, at least once, by mixing it with a first acidic aqueous liquid to obtain an aqueous-washed lupin flour. The acidic aqueous liquid comprises obviously water, which can be pure water (aqua) or drinking water, and an acid.

The pH of the mixture is advantageously adjusted to be less than 6, and preferably less than 5.5. The pH of the mixture advantageously ranges from 3.5 to 5.3, preferably 4.0 to 5.0, more preferably from 4.2 to 4.8 and most preferably from 4.4 to 4.6. A pH around 4.5 allows an optimum retention of the proteins whilst allowing removing undesirable compounds and/or anti-nutrients. This adjustment can be made by any means known to skilled person but preferably comprises the use of water which is acidified beforehand. For example, this acidification can be carried out by adding an acid such as the ones mentioned below. The use of phosphoric acid was found satisfactory. The acidified water can have a lower pH than the one which is sought to be achieved within the mixture. Using acidified water having a pH ranging from 1.5 to 3, in particular a pH of around 2, has demonstrated to be practical and effective.

In order to adjust the pH of the mixture, once the (preferably acidified) water has been added to the lupin flour, a component acting as a pH regulator, such as an acid or a base (alkali), can be added. For example, this component can be a mineral or a salt such as an alkali, (e.g. NaOH, Ca(OH)2 and/or Na2CO3), or a strong acid such as sulfuric acid or hydrochloric acid, or a weak acid, such as lactic acid, citric acid, propionic acid, ascorbic acid, phosphoric acid or sodium bisulphite. Again, phosphoric acid, in particular at a suitable concentration (*e.g.* 75% (v/v), or 1 M) is preferred.

It is further preferred that the acidic aqueous liquid used to wash the lupin flour comprises at least 90% (w/w) water, preferably at least 95% (w/w) and more preferably at least 98% (w/w) of water.

It is further preferred that the acidic aqueous liquid used to wash the lupin flour does not contain an alcohol. Using non-alcoholic liquid and in particular pure acidic water as a first wash has been shown to provide better results than to use a mixture of water and alcohol, in particular in terms of removal of undesirable compounds and/or of anti-nutrients such as phytic acid, phenolic compounds, quinolizidine, alkaloids, oligosaccharides *etc..*

The weight ratio of lupin over the water, or aqueous liquid, used can range from 1:15 to 1:4, preferably from 1:10 to 1:6, e.g. about 1:8.

According to a particular embodiment of the invention, the temperature set during the acidic aqueous washing step is ranging from 45°C to 65°C, preferably from 50°C to 65°C and most preferably from 55°C to 60°C.

According to another advantageous embodiment of the invention, the residence time of the lupin flour within the acidic aqueous liquid may range from 1 minute to 90 minutes, preferably around 1 minute to 50 minutes, most preferably from 1 minute to 30 minutes, in particular from 1 minutes to 10 minutes, more particularly from 3 minutes to 5 minutes.

As it is usual, the acidic aqueous liquid and the lupin flour can generally be admixed together by general stirring. When the acidic aqueous washing step is over, the solid can be separated from the liquid (spent aqueous solution) by usual liquid-solid separation such as decantation, filtration with a meshed material, membrane or cloth (e.g. 10µm meshed material). Decantation means, in particular a centrifugation step, is preferred. Such a step can be carried out with standard decanter which can develop centrifugal forces speed of 3000 to 5000 g, preferably around 4000 g.

The washing step can be carried out in a tank, such as an agitated filter tank, a jacketed reactor, an extractor, such as an immersion extractor, or a percolation extractor (e.g., shallow bed percolation extractor). The immersion extractor can be a countercurrent immersion extractor wherein the lupin flour is continuously convoyed through the extractor in counter current mode with the aqueous solvent.

Once the acidic aqueous washing step has been carried out the resulting solid is an aqueous-washed flour.

According to an embodiment of the invention it is considered that repeating the acidic washing step could be advantageous. In particular repeating this step more than once, preferably more than twice, in particular more than 4 times, could improve the outcome. The number of repetitions (i.e., washing) may depend upon the ratio of lupin over the water, or the aqueous liquid. According to a particularly preferred embodiment of the invention, the process of the invention comprises only one acidic aqueous washing step and not several, as it has surprisingly been found that satisfactory results can be achieved using a single wash. The economy of water connected with a process with limited amount aqueous wash is highly beneficial to the environment and to the cost effectiveness of the process.

It may also be beneficial to carry out at least one subsequent wash with only water in order to rinse the acid from the treated lupin flour and/or prepare it to the next step of the process which is a second alcohol wash. This rinse can be carried out with water at a pH of about 7. Advantageously only water, such as tap or drinking water is used.

### SECOND (ALCOHOL) WASH

According to the process of the invention the aqueous-washed lupin flour is then washed by mixing it with a first alcoholic liquid, to obtain a first alcohol-washed lupin bean flour. The first alcoholic liquid is a hydrous, a non-hydrous or an azeotrope mixture of alcohol and has preferably an alcohol concentration which may be above 75% w/w. Preferably an azeotrope (alcohol with a few percent water) is used.

The alcohol contained in the alcohol liquid is preferably chosen in the group of C1 to C20 aliphatic organic compounds, branched or not branched, that carry at least one hydroxyl functional group, and their mixture thereof. According to another preferred embodiment of the invention the alcohol solvent is a lower (C1 to C6) aliphatic alcohol, such as ethanol, isopropanol, methanol, or a mixture thereof, preferably isopropanol or ethanol. As amongst these, ethanol is particularly suitable and provides very good results.

As it is well known and well understood in the art, alcohols are hydrophilic compounds and usually contain in their commercial form a small amount of water. Hence the alcohol to be used can contains a small amount of water, in general 96% (w/w), and in particular 96% (w/w) ethanol (also called "ethanol"), is the alcohol concentration most commonly used, but higher concentration, such as up to 99% (e.g. absolute alcohol) can also be used. This step can be repeated, hence there can be two, three, four etc... alcohol washes.

Advantageously the step of washing with an alcoholic liquid is repeated no more than once. It was surprisingly found that only two successive washes with concentrated alcoholic liquid would provide a suitable high protein lupin flour.

The alcoholic liquid can comprise higher amounts of water and include what is generally known as aqueous alcohol, wherein the percentage of alcohol is about 70% (w/w), the remaining compound being water.

However better results are obtained with liquid containing a higher concentration of alcohol. It is recommended that the liquid used has an alcohol concentration of alcohol over water ranging from 75% to 99% (w/w), preferably from 80% to 99% (w/w), for example 96% (w/w). The alcoholic solvent can comprise or consist of the aqueous azeotrope of the selected alcohol, or mixtures thereof that is 96% w/w for ethanol, and 88% w/w for isopropanol, preferably +/- 2% (w/w). It was surprisingly found that, succeeding to an acidic aqueous washing step, using an alcohol-concentrated liquid has a lower denaturing effect and/or maintains an acceptable NSI (nitrogen solubility index) towards the lupin bean proteins.

The use of an alcohol liquid comprising at least 94% (w/w) and preferably 96% (w/w) of alcohol, and preferably ethanol, the remaining compound being water (or aqua), is highly preferred.

Other compounds, in particular polar solvent(s) and especially a protic solvent, to the exclusion of water, can be used in association with the alcohol. However, according to a preferred embodiment, only alcohol(s) is used to minimise the costs and the environmental consequences of the process. It should be noted that the term "an alcohol" used in the present specification encompasses mixture of alcohols.

Preferably, the aqueous-washed lupin flour is mixed with the alcoholic liquid according to a weight ratio solids:alcoholic liquid ranging from 1:2 to 1:8 w/w, preferably 1:3 to 1:4, e.g. about 1:3.5.

According to a particular embodiment of the invention, the temperature set during the alcoholic washing step is ranging from 45°C to 67°C, preferably from 55°C to 65°C, in particular around 60°C.

According to another advantageous embodiment of the invention, the residence time of the aqueous-washed lupin flour within the alcoholic liquid may range from 1 minute to 60 minutes, preferably around 1 minute to 30 minutes, most preferably from 1 minute to 20 minutes, e.g. around 1 to 10 minutes.

As it is usual, the alcohol solvent and the aqueous-washed lupin flour can generally be admixed together by general stirring. The aqueous-washed lupin flour used in this step may already contain a certain amount of water remaining from the previous process step. This will decrease the overall concentration of alcohol within the mixture. The minimum amount of alcohol within the mix should be of at least about 50% (w/w), preferably at least 70% (w/w) and advantageously at least, or around, 80% ± 2%.

A higher concentration of alcohol may be used, for example pure (99% (w/w)) or azeotropic alcohol (e.g. 96% in the case of ethanol). In this case, the aqueous-washed lupin flour can be subjected to a drying step before the wash in order to reduce the quantity of water, or other solvents, it contains.

This washing step can be performed as mentioned above in respect of the acidic aqueous washing step. Hence, it can be carried out in a tank, such as an agitated filter tank, a jacketed reactor, an extractor, such as an immersion extractor, a hydrocyclone. A counter current immersion extractor or a percolation extractor (e.g., shallow bed percolation extractor) can also be considered.

When the alcoholic washing step is over, the solid is separated from the liquid (spent first alcohol liquid) by usual liquid-solid separation as described above in reference with the acidic aqueous washing step.

It has been found that repeating the alcoholic washing step at least once is advantageous, especially to:
- lower the amount of oil from the protein-rich lupin flour
- enhance its water holding capacity, or
- provide directly a moisture-free product which does not required additional water removal step; or
- enhancing the anti-microbiological effect

Thus, according to a particularly preferred embodiment of the invention, the process of the invention may comprise only one or two alcohol washing step(s), as it has surprisingly been found that satisfactory results can be achieved using a single or at most two alcohol washes. The economy of alcohol connected with a process with limited amount of alcohol solvent is highly beneficial to the environment and to the cost effectiveness of the process.

It should be noted, that only two or three washing steps, one being an acidic aqueous wash and the other(s) an alcoholic wash, can be sufficient to satisfactorily eliminate the yellow colouring from the lupin product to obtain the protein-rich lupin flour of the invention.

When more than one alcoholic washing step is carried out, it can be beneficial to use a recycled liquid (that is the spent first alcoholic liquid resulted from a previous alcoholic washing step) for all of the repeated steps. Alternatively, recycled alcohol and fresh alcohol can be both used each for a distinct wash/step. It may also be more economical to use a mixture of fresh and recycled alcohol for some or all of the steps.

The minimum amount of alcohol within a second alcohol wash may be at least of about 65% (w/w), preferably of at least 85% (w/w) and advantageously of at least, or around, 94% ± 1% (w/w). A higher concentration of alcohol may be used, for example pure (99% (w/w)) or azeotropic alcohol (e.g., 96% in the case of ethanol). In this case, the washed protein-rich product can be subjected to a drying step before the wash in order to reduce the quantity of water, or other solvent, it contains.

According to an advantageous embodiment of the invention the pH during the alcohol washing step can be adjusted. This pH can be adjusted to range from 6 to 7.5 and is advantageously set to 6.5 ± 0.2.

In order to adjust the pH of the first solution (solvent) a component acting as a pH regulator, such as an acid or a base, can be added. For example, this component can be a mineral or a salt such as an alkali, (e.g. NaOH), or a strong acid, or a weak acid, such as the ones mentioned before.

As it is usual, when the alcohol washing step is over the solid is separated from the liquid by usual liquid-solid separation as described above in reference to the acidic washing step. The solid thus obtained is a protein-rich lupin flour according to the invention.

According to a particular aspect of the invention the protein-rich lupin flour does not have to be pasteurized. Indeed the alcohol-treated flour is devoid of biologic contaminants and thus does not require to be further purified or sanitized.

### DESOLVENTIZING (DRYING)

According to an embodiment of the invention, the protein-rich lupin flour may be subjected to a desolventizing step which may be achieved under partial vacuum, using, for example, a vacuum paddle dryer; a drying stove or a laminar flow hood; in particular a Paddle vacuum Dryer, Double Cone Dryer or a Down Draft Desolventizer (DDD). A drying oven or a double cone vacuum dryer can also be used. Alternatively, it can be achieved in a tank or reactor wherein the process has taken place by applying a vacuum (*e.g.* 0.1 to 0.2 bar) and at a convenient temperature (*e.g.* below 70°C, preferably below 60°C). The use of a vacuum allows minimising denaturation of the proteins. According to an advantageous embodiment of the invention the residence time of the protein-rich lupin flour is ranging from 100 minutes to 200 minutes, preferably 120 minutes. Advantageously the temperature is lower than 70°C, preferably lower than 60°C. For example, the temperature is ranging from 50 to 60°C, preferably for about 180 ± 10 mins.

Desolventizing (drying) steps can also be used within the process of the invention as intermediary steps to dry, *i.e.*, remove the solvent or moisture, from the solids. For example it can advantageously be used between subsequent washes. This permits to better remove one solvent, e.g. water, when another solvent, e.g. (aqueous) alcohol, is to be used. It also allows, as described above, to prevent, or minimize, the dilution of the next solvent. It also may improve the efficacy of the previous washing step by removing more undesirable components dissolved within the solvent.

It is however a particularly advantageous aspect of the process according to the invention that a direct solid/liquid separation is sufficient between these two different washes and that there is no need to carry out separate drying or desolventizing steps between the different washes. This is due to the particular combination of solvents used, *i.e.* water and alcohol (and in particular ethanol), which are compatible and in particular soluble one within the other.

Advantageously, the protein-rich product is dried to reach a moisture content ranging from 5% to 10%. This step produces a "dry protein-rich lupin flour".

### SIEVING (SORTING)

The protein-rich lupin flour can be subjected to at least one sieving (or sorting) step. Sieving technologies are well known in the art. For example, one can use a sieving or plansifter machine or a triboseparator. However, when the lupin flour is made from kernels (completely dehulled beans) this step is usually not required and can be omitted.

### MILLING-MICRONISING

Additionally, or alternatively, the protein-rich lupin flour can be transformed into a powder, such as a micronized powder. This step can be carried out by using a milling technology such as air jet mill or impact mill For example. Advantageously, the protein-rich lupin flour has a D50 (µm) average particle size comprised, between 25µm and 100µm, preferably between 25µm and 50µm, more preferably between 25µm and 40µm,

Advantageously, the protein-rich lupin flour has a D90 (µm) average particle size comprised between 30µm and 500µm, preferably between 30µm and 250µm, more preferably between 50µm and 120µm, in particular between 50µm and 80µm . The average size particle of the protein-rich lupin flour before and after milling can be measured using laser diffraction (Mastersizer 2000, Malvern, cell, dispersion unit Hydro 2000, dispersant: Alcool, refractive index: 1,52, Absorption: 0,1). This optional milling step allows obtaining a homogenous product.

A micronized powder, or flour, is therefore another object of the invention. Preferably the powder, or flour, is a white powder. Such a white powder is obtainable according to the process of the invention, in particular when the starting material used is kernels, *i.e.* dehulled lupin beans.

### MISCELLANEOUS

According to one embodiment of the process of the invention, the alcohol used is ethanol, and preferably ethanol at 96% (w/w) in all of the alcohol-using processing steps.

According to another embodiment of the process of the invention, it does not comprise a precipitation step.

According to another embodiment of the process of the invention, it does not comprise a microfiltration or diafiltration step.

According to yet another embodiment of the process of the invention, it does not comprise the use of a cyclone concentrator or a cyclone concentration step.

The washing steps of the process of the invention advantageously include removing (extracting) at least some undesirable molecules (UM) such as carbohydrates (monosaccharides, disaccharides and oligosaccharides) quinolizidine alkaloids, phytic acid and carotenoids compounds such as lutein and beta-carotene from the lupin flour. Carbohydrates, include monosaccharides (such as fructose, glucose, and galactose), disaccharide (sucrose), and polysaccharides such as alpha-galactosyl derivatives of glucose, among which most common are the trisaccharide raffinose, the tetrasaccharide stachyose, and the pentasaccharide verbascose. These oligosaccharides are particularly undesirable. Sugars are monosaccharides and disaccharides.

According to a particularly preferred other embodiment of the invention the process does not dissolve the lupin proteins and, eventually, the fibres to be concentrated in water at an alkaline/basic pH. These proteins and, eventually fibres to be concentrated may advantageously stay in a solid or undissolved state throughout the process of the invention. Thus, the concentration of the desirable proteins can be achieved mainly through dissolving and washing away unwanted components (e.g. fat, phytic acid, carbohydrate, albumins, quinolizidine alkaloids etc..) and drying, or desolventizing, the proteins remaining in the meal.

According to yet another embodiment of the process of the invention, no more than three washing steps, one aqueous and two alcoholic are carried out. Advantageously the process does not include drying or desolventizing steps in between subsequent washing steps.

### PROTEIN-RICH LUPIN FLOUR

As mentioned above, a particular object of the invention is a protein-rich lupin flour. By "protein-rich lupin flour" it is meant that the protein content of the flour of the invention is substantially higher to the lupin flour obtained from grinding lupin beans or dehulled lupin beans. By substantially higher it is meant an increase of at least 5%, preferably at least 8%, and more preferably at least 10%, these percentages being in total weight of dry matter (DM). As lupin flours usually present a protein content over dry matter of about 40%, the expression "protein-rich" is particularly directed to a lupin flour having a protein content of at least 45% dry matter w/w, preferably at least 48% dry matter w/w (DM), more preferably at least 50% dry matter w/w and especially at least 51%, and less than 75% dry matter w/w (N x 6.25). Advantageously the protein-rich lupin flour according to the invention comprises from 45% to 58% w/w on dry matter of proteins, preferably from 48% to 55% w/w and more preferably from 50% to 54% (w/w) over dry matter.

Another object of the invention is a protein-rich lupin flour, which can be obtained or obtainable by a process of the present invention as described therein. Hence, a protein-rich lupin flour according to the process invention relates to a lupin bean flour which can have been washed with solvents in order to remove undesirable component but still contain a substantial amount of the original fibres.

The protein-rich lupin flour, which can be obtained, or is obtainable, according to the process of the present invention, may also be relatively rich in fibre and may advantageously have an amount of total fibres of at least 20% DM (w/w), preferably of at least 30% DM (w/w), more preferably of at least 32% DM (w/w) and even more preferably of at least 36% DM (w/w). Advantageously the protein-rich lupin flour according to the invention comprises from 20% to 42% w/w on dry matter of fibres, preferably from 30% to 40% w/w.

The protein-rich lupin flour of the invention is not yellow and has preferably a neutral colour which can be white, whitish, off white or beige and is particularly suitable for food processing.

Measurement of CIELAB 1976 parameters, or coordinates, L*, a* and b*, defines a position in the CIELAB colour space and allows to express the colour of a material and compare it to others. Lightness (L) relates to the light or dark aspect of a colour, wherein the lower the L-value, the darker the powder will appear. The a* value defines a position between green and red (where negative values indicate green and positive values indicate red) and the b* value its position between yellow and blue (where negative values indicate blue and positive values indicate yellow). In this specification the CIELAB (1976) colorspace is the one used to define the colour of the product of the invention.

The spectral colour is the result of the source of light and the reflecting surface. For a good reproducible measurement of the colour, standard conditions have to be met when carrying the measurement. These standard conditions are described herein below. The colour values recited herein are approximate in the sense that colour measurements may vary from spectrophotometer-to-spectrophotometer, typically in the range of +/- 0.5 for L*, a*and b* values. The spectrophotometer used is a colorimeter CR-400/410 from Minolta.

A particularly preferred embodiment of the invention is therefore a protein-rich lupin flour having a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0.

Advantageously or alternatively, the protein-rich lupin flour of the invention can have a high L* value such as a L* value of at least 90, preferably at least 93, more preferably ranging from 94 to 100 and even more preferably of at least 95.

According to a preferred embodiment the a* value of the protein-rich lupin flour may range from -2.0 to +2.0, preferably from -1.0 to +1.0 and even more preferably from -0.7 to + 0.7.

According to a preferred embodiment of the invention the protein-rich lupin flour comprises at least 45% DM w/w of proteins and at least 20% DM w/w of total fibres.

According to another object of the invention, the protein-rich lupin flour of the invention, which may be advantageously obtained or obtainable by the process of the present invention, comprises the following features:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25); and
- an amount of total fibres of at least 20% DM (w/w), preferably of at least 30% DM (w/w), more preferably of at least 32% DM (w/w) and even more preferably of at least 36% DM (w/w).

The protein-rich lupin flour of the invention, which may be obtained or obtainable by the process of the present invention, has advantageously a low amount of fat and in particular a fat content of 10% or less dry matter w/w, preferably 5% DM w/w or less, in particular 3% or less dry matter (w/w), e.g. 1% or less DM (w/w). Advantageously the protein-rich lupin flour according to the invention comprises from 0.1% to 6% w/w on dry matter of fat, preferably from 0.2% to 4% w/w and more preferably from 0.3% to 2% (w/w) over dry matter. A preferred protein-rich lupin flour of the invention comprises the following features:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w); and
- a low amount of fat and in particular a fat content of 10% or less dry matter w/w, preferably 5% DM w/w or less, in particular 3% or less dry matter (w/w), e.g. 1% or less DM (w/w).

The protein-rich lupin flour of the invention, which may be obtained or obtainable by the process of the present invention, has advantageously a low amount of phytic acid and in particular a phytic acid content of 3% or less dry matter w/w, preferably 5% or less DM w/w, in particular 3% or less dry matter (w/w), e.g. 1% or less DM (w/w). A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w); and
- a low amount of phytic acid and in particular a phytic acid content of 3% or less dry matter w/w, preferably 5% or less dry matter w/w, in particular 3% or less dry matter (w/w), e.g. 1% or less DM (w/w).

The protein-rich lupin flour of the invention, which may be obtained or obtainable by the process of the present invention, has advantageously a low amount of oligosaccharides, and in particular a low amount of alpha-galactosyl derivatives of glucose, such as a low amount of raffinose, stachyose, and/or verbascose. By "low amount" it is meant that the oligosaccharides content, and preferably the content of raffinose, stachyose, and verbascose, may be of less than 3% w/w, preferably 2% or less w/w, in particular 1.5% or less (w/w), e.g.1,2%. With respect to raffinose and verbascose, their respective amounts can even be lower, such as less than 0.5% w/w or even not detectable (i.e. less than 0.2% w/w). Advantageously, stachyose can also be lower, in particular lower than 1% w/w, or lower than 0.8% w/w, for example around 0.4% w/w or even not detectable.

A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w); and
- a low amount of oligosaccharides, and in particular a low amount of alpha-galactosyl derivatives of glucose, such as a low amount of raffinose, stachyose, and/or verbascose.

The protein-rich lupin flour of the invention, which may be obtained or obtainable by the process of the present invention, has advantageously a low amount of total sugars. It can comprise a total sugar content of 1.5% (w/w) or less, preferably of 1.0% (w/w) , and even preferably of 0.4% (w/w) , or less, e.g. less than 0.3% (w/w). A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w);
- a low amount of oligosaccharides, and in particular a low amount of alpha-galactosyl derivatives of glucose, such as a low amount of raffinose, stachyose, and/or verbascose; and
- a low amount of total sugar, and in particular a total sugar content of 1.5% (w/w) as is or less, preferably of 1.0% (w/w) as is, and even preferably of 0.4% (w/w) as is, or less, e.g. less than 0.3% (w/w).

The protein-rich lupin flour of the invention, which may be obtained or obtainable by the process of the present invention, has advantageously a protein solubility of less than 20%, in an aqueous solution at a pH ranging from 4 to 6, and/or a protein solubility of more than 45%, preferably more than 50% in an aqueous solution at a pH of, or higher to, 8.from 4, the solubility being measured by the method described in the Examples (see infra). A protein solubility of less than 20%, in an aqueous solution at a pH ranging from 4 to 6 is particularly suitable for the manufacturing of texturized meat analogs. A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w);
- a low amount of oligosaccharides, and in particular a low amount of alpha-galactosyl derivatives of glucose, such as a low amount of raffinose, stachyose, and/or verbascose;
- a low amount of total sugars, and in particular a total sugar content of 1.5% (w/w) as is or less, preferably of 1.0% (w/w) as is, and even preferably of 0.4% (w/w) as is, or less, e.g. less than 0.3% (w/w); and
- a protein solubility of less than 20%, in an aqueous solution at a pH ranging from 4 to 6, and/or a protein solubility of more than 45%, preferably more than 50% in an aqueous solution at a pH of, or higher to, 8.from 4.

The protein-rich lupin flour of the invention, which may be obtained or obtainable by the process of the present invention, has advantageously a water holding capacity (WHC) per gram of flour, of at least 2.5 g/g, preferably from 2.6 g/g to 7.0 g/g, in particular from 2.8 g/g to 4.5 g/g, more particularly from 2.9 g/g to 3.5 g/g of flour; the method for measuring the WHC being described in the Example below. A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w);
- a low amount of oligosaccharides, and in particular a low amount of alpha-galactosyl derivatives of glucose, such as a low amount of raffinose, stachyose, and/or verbascose;
- a low amount of total sugars, and in particular a total sugar content of 1.5% (w/w) as is or less, preferably of 1.0% (w/w) as is, and even preferably of 0.4% (w/w) as is, or less, e.g. less than 0.3% (w/w);
- a protein solubility of less than 20%, in an aqueous solution at a pH ranging from 4 to 6, and/or a protein solubility of more than 45%, preferably more than 50% in an aqueous solution at a pH of, or higher to, 8.from 4; and
- a water holding capacity (WHC) per gram of flour, of at least 2.5 g/g, preferably from 2.6 g/g to 7.0 g/g, in particular from 2.8 g/g to 4.5 g/g, more particularly from 2.9 g/g to 3.5 g/g of flour. The protein-rich lupin flour of the invention, which may be obtained or obtainable by the process of the present invention, has advantageously a minimum gelling concentration of 15% (w/w) protein content or less, preferably of 12% (w/w) protein content, more preferably of 10% or less, and even more preferably of 6% or less protein content; the method for measuring this concentration being described in the Example below. A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w);
- a low amount of oligosaccharides, and in particular a low amount of alpha-galactosyl derivatives of glucose, such as a low amount of raffinose, stachyose, and/or verbascose;
- a low amount of total sugars, in particular a total sugar content of 1.5% (w/w) as is or less, preferably of 1.0% (w/w) as is, and even preferably of 0.4% (w/w) as is, or less, e.g. less than 0.3% (w/w);
- a protein solubility of less than 20%, in an aqueous solution at a pH ranging from 4 to 6, and/or a protein solubility of more than 45%, preferably more than 50% in an aqueous solution at a pH of, or higher to, 8.from 4;
- a water holding capacity (WHC) per gram of flour, of at least 2.5 g/g, preferably from 2.6 g/g to 7.0 g/g, in particular from 2.8 g/g to 4.5 g/g, more particularly from 2.9 g/g to 3.5 g/g of flour; and- a minimum gelling concentration of 15% (w/w) protein content or less, preferably of 12% (w/w) protein content, more preferably of 10% or less, and even more preferably of 6% or less protein content.

The protein-rich lupin flour of the invention, which may be obtained or obtainable by the process of the present invention, has advantageously an D50 (µm) average particle size ranging from 15µm to 1000µm, preferably from 20µm to 100µm, more preferably from 25µm and 50µm. Additionally or alternatively the protein-rich lupin flour according to the invention may have an D90 (µm) average particle size particle size ranging from 40µm to 1000µm, preferably from 50µm to 500µm, more preferably from 60µm and 100µm. A preferred protein-rich lupin flour of the invention comprises:
- a b* value which is less than 18, preferably less than 17.4, more preferably less than 15.0 and even more preferably less than 12.0. Also, the b* value may be superior to -10, is preferably superior, or equal to, 0 and is more preferably superior, or equal to, 4.0;
- a high L* value such as a L* value of at least 90, preferably at least 93, more preferably ranging from 94 to 100 and even more preferably of at least 95;
- at least 45% dry matter w/w, preferably at least 48% dry matter w/w, more preferably at least 50% dry matter w/w and especially at least 51%, and less than 75% dry matter w/w (N x 6.25);
- an amount of total fibres of at least 20% DM (w/w), preferably of at least 30% DM (w/w), more preferably of at least 32% DM (w/w) and even more preferably of at least 36% DM (w/w);
- a low amount of fat and in particular a fat content of 10% or less dry matter w/w, preferably 5% DM w/w or less, in particular 3% or less dry matter (w/w), e.g. 1% or less DM (w/w);
- a low amount of phytic acid and in particular a phytic acid content of 3% or less dry matter w/w, preferably 5% or less dry matter w/w, in particular 3% or less dry matter (w/w), e.g. 1% or less DM (w/w);
- a low amount of oligosaccharides, and in particular a low amount of alpha-galactosyl derivatives of glucose, such as a low amount of raffinose, stachyose, and/or verbascose;
- a low amount of total sugars, in particular a total sugar content of 1.5% (w/w) as is or less, preferably of 1.0% (w/w) as is, and even preferably of 0.4% (w/w) as is, or less, e.g. less than 0.3% (w/w);
- a protein solubility of less than 20%, in an aqueous solution at a pH ranging from 4 to 6, and/or a protein solubility of more than 45%, preferably more than 50% in an aqueous solution at a pH of, or higher to, 8.from 4;
- a water holding capacity (WHC) per gram of flour, of at least 2.5 g/g, preferably from 2.6 g/g to 7.0 g/g, in particular from 2.8 g/g to 4.5 g/g, more particularly from 2.9 g/g to 3.5 g/g of flour;
- a minimum gelling concentration of 15% (w/w) protein content or less, preferably of 12% (w/w) protein content, more preferably of 10% or less, and even more preferably of 6% or less protein content; and
- an D50 (µm) average particle size ranging from 15µm to 1000µm, preferably from 20µm to 100µm, more preferably from 25µm and 50µm, and/or a D90 (µm) average particle size particle size ranging from 40µm to 1000µm, preferably from 50µm to 500µm, more preferably from 60µm and 100µm.

It is further preferred that the protein-rich lupin flour according to the invention, has a gelling capacity measured by the G' (the elastic or storage modulus) after thermal treatment (Pa), or final G', ranging from 4 kPa to 20 kPa, preferably from 5 kPa to 18 kPa, more preferably from 5 kPa to 10 kPa, e.g. 7.4 kPa; the method for measuring the WHC being described in the Examples below.

It is also preferred that the protein-rich lupin flour of the invention contains little or no trace of hexane and more generally of a non-polar organic solvent and/or little or no trace of aprotic solvents and/or of an alkali treatment.

It is further preferred that the protein-rich lupin flour of the invention contains little or no additive, and/or be constituted of at least 95% (w/w), preferably of at least 98% (w/w) of organic matter originating from the lupin bean. However, the protein-rich lupin flour of the invention may contain traces (i.e. less than 1% (w/w)) of an alcohol, such as ethanol, and, eventually of an acid, such as phosphoric acid.

### USES and METHODS

The protein-rich lupin flour according to the invention can be used in the food industry or feed industry, in particular for preparing a food product. In particular these food products can be related to bakery and cereals (ex. bread, biscuits, snack, cereals, and nutritional bars).

As the protein-rich lupin flour above described has a good water holding (absorption) capacity it is particularly well suited to be used as an ingredient (e.g., a structuring agent) for preparing meat based products (such as nuggets, knacks, ham or burgers) as well as meat (partial or total substitutes) in particular as meat alternatives or meat analogues (100% vegetarian products).

The invention also provides a process of making a foodstuff, a beverage or a food supplement, by adding and/or mixing any one of the protein-rich lupin flour as above described, or a mixture thereof, to other ingredients.

Another object of the invention is the use of any one of protein-rich lupin flour as above described, or a mixture thereof, as a biofuel or bio-material or bio-composite, e.g. building materials.

Another object of the invention is the use of a protein-rich lupin flour as above described, or a mixture thereof, as an animal feed (e.g. aquafeed) or a food or a dietary supplement or additive for animal and/or human consumption.

Foregoing and other objects and advantages of the invention will become more apparent from the following detailed description, which refers to non-limiting examples illustrating the uses according to the invention.
**Figure 1****:** is a flow chart of the steps of the embodiment of the process of the invention described in example I.
**Figure 2****:** shows a picture of the protein-rich flour obtained in Example I.
**Figure 3****:** shows a graph of the protein solubility of the protein-rich flour of Example I as a function of the pH.
**Figures 4 & 5****:** show pictures of various water solutions of the protein-rich flour of the invention of example I at various concentrations before heat treatment (Figure 4) and after heat treatment (Figure 5) turned upside-down.

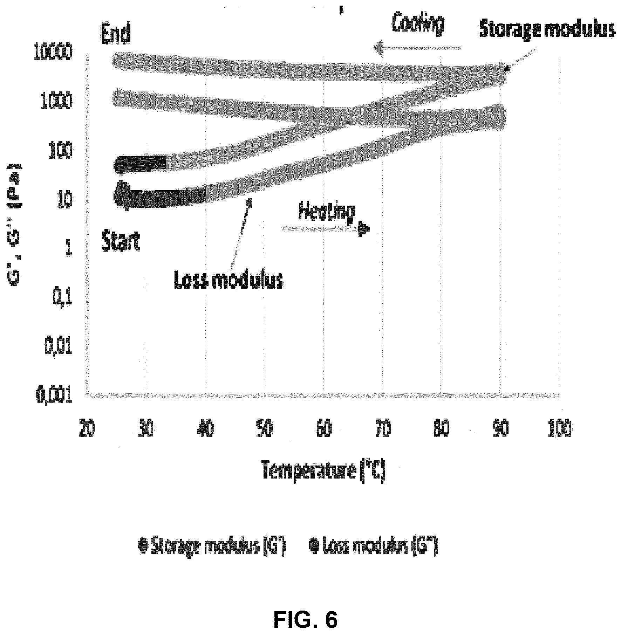

**Figure 6** : is a graph of the evolution of the storage modulus G' and the loss modulus G" of the protein-rich flour of Example I during heating and cooling in a rheometer.

### Example I: Production of a protein-rich lupin flour according to an embodiment of the invention

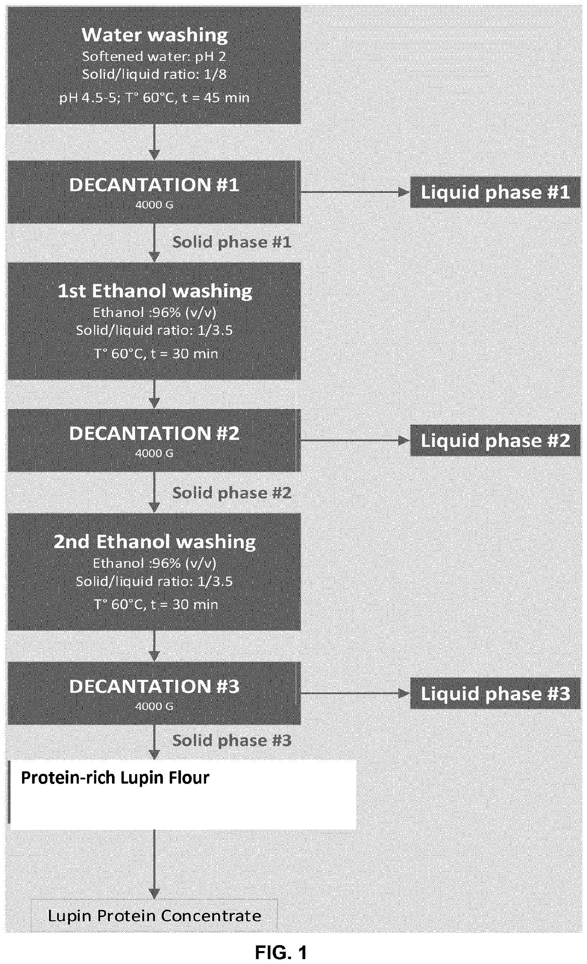

Process steps to obtain protein-rich flour according to this embodiment of the invention are summarised in the flow chart of Figure 1.

### 1. Starting material

The starting material was a Lupine (L. *albus*) flour (Farilup 500, Inveja SAS, France) which is a micronized fully dehulled lupin bean (*i.e.,* lupin kernel) having a particle size (D90) of 500 µm.

The composition of the flour is mentioned below.

**Table 1: Composition of the lupin flour**

| **Components in weight % over total weight ("as is") except specified otherwise** | **Lupine flour** |
|---|---|
| Moisture | 5.1 |
| Fat | 10.0 |
| Protein | 39.7 |
| Protein* (% dry matter) | 41.8 |
| Protein* (% defatted dry matter) | 46.8 |
| Ash | 3.9 |
| | |
| Colour | L*=91,5 ; a*= -1,99 ; b* = 26,21 |

| | |
|---|---|
| * Protein = Nx6.25 | |

### 2. Washing steps and production of a protein-rich flour according to the invention

### 2.1 Water washing step

Three (3) kilograms of lupine flour were added to a stirred jacketed tank which contained water acidified beforehand to pH 2 using phosphoric acid and preheated at 60 °C. The flour:water weight ratio used was 1:8. The pH of the mixture was then adjusted at around 4.5 using 1 M phosphoric acid, and the temperature maintained between 55-60 °C. At this pH, the mixture was stirred for 45 minutes and then separated by centrifugation at 4000 g using a small scale decanter (MD80, Lemitec). During decantation, the decanter settings were chosen as shown in Table 2 below to obtain a liquid fraction with 1% wt.% of solids when the input slurry contains 24 wt.% of solids. The feed rate of the decanter was set at 67L/h.

**Table 2**

| Acid wash decantation | |
|---|---|
| Feed | 67 L/h |
| g-force | 4000 |
| Diaphragm | 12 mm |
| | |
| Feed solid content | 24% |
| Liquid phase solid content | 1% |

After the decantation, 19.5 Kg of liquid phase and 6.9 Kg of solid phase were obtained. The solid fraction was used for the next step.

### 2.2 First alcohol washing step

6.3 Kg of the solid fraction recovered from the previous decantation (6.9 Kg) were mixed with ethanol 96% preheated at 60 °C in the same tank. The weight ratio solids:96% ethanol used was 1:3.5, i.e. 21.7 Kg of ethanol 96% was used. The mixture was stirred for 30 minutes at constant temperature (59-60 °C) during 30 minutes and separated by centrifugation at 4000 g with the MD80 decanter. During decantation, the parameters were set as shown in Table 3 below, to obtain a liquid fraction with 0.3 wt.% of solids. The feed rate of the decanter was set at 67 L/h. The diameter of the diaphragm (liquid separator) were established at 12 mm and the differential speed between the bowl and the screw was adjusted to115 RPM.

**Table 3**

| Acid wash decantation | |
|---|---|
| Feed | 67 L/h |
| g-force | 4000 |
| Diaphragm | 12 mm |
| Differential speed | 115 RPM |
| Liquid phase solid content | 0.2% |

At the end of the decantation step, 23 Kg of liquid phase and 3.9 Kg of solid phase were obtained. The solid fraction was used for the next ethanol washing step.

### 2.3 Second alcohol washing step

3.7 Kg of the solid fraction recovered from the previous decantation (3.9 Kg) was mixed with ethanol 96% preheated at 60 °C in the same tank. The weight ratio solids:96% ethanol used was 1:3.5, i.e. 13 Kg of ethanol 96%. The mixture was stirred for 30 minutes at constant temperature (59-60 °C) during 30 minutes and separated by centrifugation at 4000 g with the MD80 decanter. During decantation, the decanter parameters were set as shown in Table 4 to obtain a liquid fraction with 0.3 wt.% of solids. The feed rate of the decanter was set at 67 L/h. The diameter of the diaphragm (liquid separator) was 12 mm. The differential speed between the bowl and the screw was adjusted to range from 140 to 200 RPM.

**Table 4**

| Acid wash decantation | |
|---|---|
| Feed | 67 L/h |
| g-force | 4000 |
| Diaphragm | 12 mm |
| Differential speed | 140-200 RPM |
| Liquid phase solid content | 0.3% |

At the end of the decantation step, 12.6 Kg of liquid phase and 3.1 Kg of solid phase were obtained. The solid fraction was used for the drying step.

### 2.4 Drying step

The total amount of solid fraction obtained in the previous step was dried by using a ventilated oven dryer (Cellule 45, Capic). The drying temperature is kept at 40°C for 24 hours.

After the drying step, around 1.4 Kg of protein-rich lupin flour was obtained. The mean dry matter content of the flour was 94.5 wt. %.

### 2.5 Milling step

The protein-rich lupin flour obtained after drying was milled by using an Impact mill 100ZPS equipped with 70 ATP selector (both from Hosokawa-Alpine^{®}). The particles size before and after milling are shown in Table 5 below.

**Table 5**

| | ***d10 (µm)*** | ***d50 (µm)*** | ***d90 (µm)*** | ***d97 (µm)*** |
|---|---|---|---|---|
| **Before milling** | 6,21 | 39,2 | 116,0 | 175,0 |
| **After milling** | 8,88 | 28,4 | 61,4 | 91,6 |

### 3. Physical properties and chemical composition of the protein-rich flour

### 3.1 Composition

The composition is shown in Table 6 below. The protein purity of the protein-rich lupin flour is 52.7 wt. % / DM against 41.8 wt. % / DM in the (non-washed) lupin flour. This enrichment is due to the significant elimination of fat and other compounds achieve by the process of the invention.

**Table 6**

| | |
|---|---|
| Dry matter (DM) | 98.9 wt.% |
| Protein ("as is") | 52.1 wt. % |
| Protein /DM | 52.7 wt.% |
| Ash /DM | 2.8 wt.% |
| Fat /DM | 1.1 wt.% |
| Total fibres /DM | 36.1 wt.% |
| Total sugars ("as is") | 0.3 wt.% |
| Phytic acid /DM | 1.69 wt.% |
| Raffinose ("as is") | <0.2 wt. % |
| Stachyose ("as is") | 0.8 wt. % |
| Verbascose ("as is") | <0.2 wt. % |

### 3.2 Colour and taste of the protein-rich flour

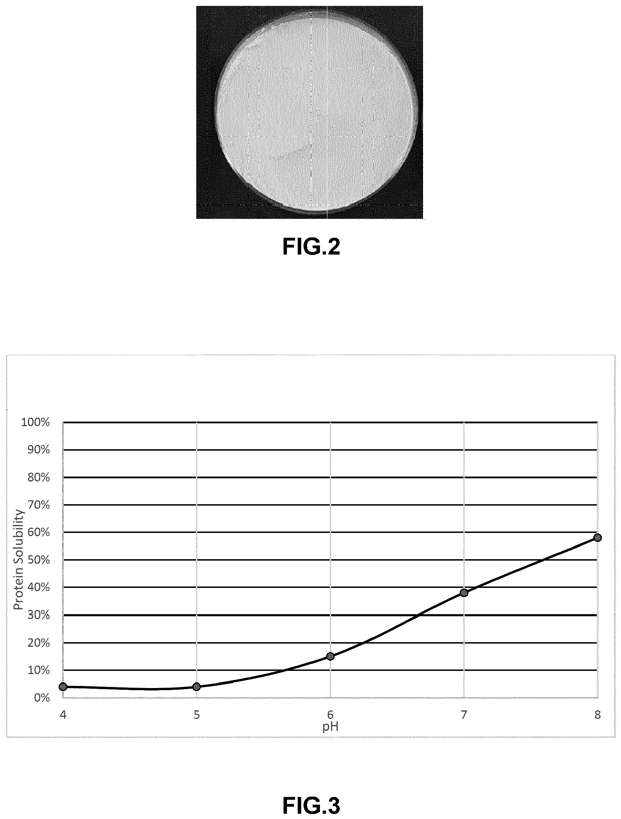

The flour obtained is shown in Fig.2. The colour of the flour is of a slightly off white colour. This is remarkably different from the starting material which had an unappealing yellowish colour.

The colour coordinates CIELAB (1976) scale, are set forth in Table 7 below.

**Table 7**

| | |
|---|---|
| L* | 95.49 |
| a* | -0.49 |
| b* | 9.57 |

The taste of the flour was found to be neutral with no unpleasant (i.e. bitter or bean-like) taste.

### 3.3 Differential Scanning Calorimetrv (DSC)

The Lupin protein-rich flour was analysed by DSC. With this equipment, samples are heated from 20°C to 120°C and the energy associated to the thermal modification of molecules is measured. If the proteins have been preserved during the extraction process, a large peak is observed at the denaturation temperature of globular proteins. If the proteins have already been denatured during the extraction process, no peak is observed with the DSC. A peak at 90,3°C was observed, which corresponds to the denaturation temperature of proteins. The heat associated to this peak is 0.26 J/g. This indicates that the proteins are still native or at least only partially denaturated.

### 3.3 Functional properties

The functional properties are reported in the table 8 below. The solubility of the flour in water vs. the pH is shown in Fig. 3.

**Table 8**

| | | |
|---|---|---|
| Protein Solubility | pH 4 | 4% |
| | pH 5 | 4% |
| | pH 6 | 15% |
| | pH 7 | 38% |
| | pH 8 | 58% |
| Water holding capacity (g of water /g of solids) | | 3.1 |
| Minimum gelling concentration | % proteins | 6 |
| Gelling properties | Final G', after thermal treatment (Pa) | 7392 |

The protein solubility is very low between pH 4 and pH 6 as it is inferior to 15%. The protein solubility is higher for a neutral pH, i.e. 38% at pH 7 and even higher for a basic pH, i.e. 58% at pH 8.

The Water Holding Capacity is good : 1 g of flour (i.e. solids) can retain 3.1 g of water.

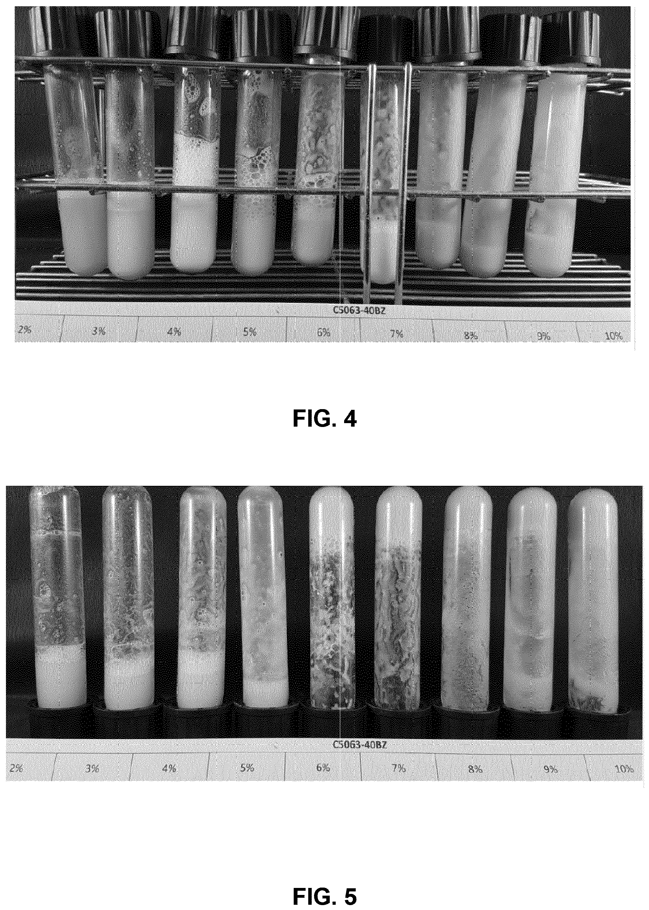

The minimum gelling concentration is 6 g of protein / 100 g solution. Pictures of the various solutions before heating (Figure 4) and after heating (Figure 5) were taken. It should be noted that a very thick paste was obtained at 10% protein concentration as illustrated by the pictures.

Regarding the rheological properties, a progressive increase in G' during the heating step, especially from 50°C onward, was observed. This increase from this low temperature may be due to water absorption with time rather than protein gelation. The G' value after cooling of the samples (gel strenght) was quite high: 7392 Pa.

### Methods

The analytical methods used in these experiments were the following:

### • Dry matter

Total dry matter concentration in % (w/w) was determined using the French Standard NF EN ISO 6498 (2012).

### • Protein content

The protein content was determined by the Dumas/Kjeldahl method according to the French Standard (Norme AFNOR) NF EN ISO 16634-1. A conversion factor of 6.25 (N*6, 25) was used to determine the amount of protein (% (w/w)).

### • Ash content

The total ash content was determined according to the method described in the French Standard NF V18-101 (1977) entitled "Dosage des cendres brutes"/ "Measurement of raw hashes". The samples were preliminary grinded using a Retsch Grinder with a 1mm grid.

The following changes were made to NF V18-101 (1977):
The NF V18-101 Standard recommends to first carbonising the test sample using a flame treatment or a progressive heating on a hot plate before it putting it in a muffle furnace at 550°C for a period of three hours. The method used to measure the ash content in the example avoids this preliminary calcination step, by increasing the heating time in the muffle furnace at 550°C from three (3) to thirteen (13) hours.

In the event that the sample is insufficiently calcined, the Standard NF V18-101 requires the ashes to be moistened with pure water, dried in a drying oven (about 1 hour) , then heated for 1 hour in the muffle furnace. In the present case, it is recommended to increase the 1 hour heating of the dried sample in the muffle oven from 1 to 13 hours at 550°C. The resulting ash content is provided as a (w/w) percentage of the sample original weight.

### • Fat content

The fat content (%(w/w)) was determined according to the Standard NF ISO 6492 - B (2011) entitled "*Aliments des animaux* - *Determination de la teneur en matiere grasse*/ *Animal feeding stuffs* - *Determination of fat content*" which measures the fat content after carrying out a hydrolysis with 3N aqueous chlorhydric acid. The samples were preliminary grinded using a RETSCH Grinder ZM 20 to achieve an average size of 1mm/using glass bead of 1mm. The following changes were made to NF ISO 6492 - B (2011):
The mass of the sample being analysed was reduced to 0.8g.
NF ISO 6492 - B (2011) recommends the use of a Soxhlet extractor. Instead, an automated system such as the one sold under SoxtecTM by FOSS (Denmark) was used.

### • Fat content for flour

ISO 22630:2015 method.

### • Total fibres (soluble and insoluble fibres)

AOAC 985.29 standard.

### • Sugars content

The content of sugars (% (w/w)) was determined using the Luff Schoorl method as described in UE Regulation 152/2009.

### • Phytic acid

- Analytical Biochemistry Vol. 77:536-539 (1977).
- **L*a*b***

The device used to carry out the colour measurement is a CR-400/410 chromameter (Minolta). The powder sample was placed in a Petri dish and flattened, then the chromameter was placed in contact with the product vertically to the sample and the measurement is made. There is no specific mass to be weighed, but a significant and homogeneous sample thickness is required throughout the Petri dish. The Petri dish was filled to a thickness of about 0.5 cm. The 3 coordinates L*, a*, b* (without unit) are read. The illuminant was D65, the number of measures taken n=1, no backlight was used and the observer angle selected was 0°.

The colorimeter consists of a sensor associated with filters and a microprocessor. The detection system is composed of three interference filters associated with a sensor. Colour analysis of powder was evaluated with a colorimeter. Results are expressed by 3 parameters L*, a* and b* according to the CIELab (1976) colour space :
L * (lightness), which ranges from 0 (black) to 100 (white);
a* which ranges from -300 (green) axis to 299 (red); and
b* which ranges from -300 (blue) axis to 299 (yellow).

### • Thermal stability by DSC (Differential Scanning Colorimetry)

DSC analysis consists in the measurement of the energy required to raise the temperature of a sample. An aqueous solution of proteins was used at a concentration of 10% w/v after 1 hour solubilisation at 30°C in a Rheax. DSC analysis was carried out in two steps: heating from 20 to 120°C with a gradient of 0.5°C/min and subsequent cooling step from 120 to 20°C with a gradient of 1°C/min. The parameters measured were denaturation temperature and specific heat.

### • Protein solubility

The protein solubility was tested on protein suspensions at 2% (w/w) dry matter content at pH 4, 5, 6, 7 and 8. The protein solubility was estimated by the Kjeldahl method on the supernatant after centrifugation (15000 g, 10 minutes). The calculation of percentage of proteins solubility = Proteins in the supernatant % x 100 /proteins initially put in the solution.

### • Water holding capacity

The water holding capacity was measured by adding samples in water at a concentration of 20 mg/ml of dry matter. Solutions were blended 1 hour under stirring. After centrifugation at 15000 g during 10 min, the water content of the pellet was measured and compared with the initial weight of materials. Results are expressed as the numbers of times that sample retain its weight in water.

### • Minimum gelling concentration

Minimum gelling concentration was measured by preparing solutions of protein-rich flour in water starting from a protein concentration from 2% (w/w) to 10% (w/w) in test tubes. The protein content or the solid content is increased by 1% for each tube. After solubilisation, solutions were heated 1h in a water-bath at 85°C and then cooled 2h at 4°C. A solution was considered to have formed a gel if it behaved like a liquid before heating (i.e. free-flowing) and did not flow when test-tube was put upside-down after heating.

### • Gelling properties

Gelling capacity was measured on a DHR-2 rheometer (TA) with a 40 mm plate / plate geometry. A 8% protein solution at pH 7 of the protein-rich flour was used. A temperature ramp was applied to the sample: heating from 25 to 90°C with a gradient of 2°C/min, stabilization without oscillation at 90°C for 10 minutes, cooling from 90 to 25°C with a gradient of 2.5°C/min. A strain of 0.1% was applied during the test. G' (storage modulus) and G" (loss modulus) were measured.

### • Particle size

Size distributions of the powder were measured with a particle size analyser (Mastersizer, Malvern). Air dispersant was used. The Mie model was used for calculation, by considering the particles non-spherical. A refraction index of 1.49 and an absorption index of 0.1 were used. The parameters measured were:
D10: diameter at which 10% of a sample's mass is comprised of smaller particles;
D50: diameter at which 50% of a sample's mass is comprised of smaller particles; and
D90: diameter at which 90% of a sample's mass is comprised of smaller particles.

## Claims

1. A process for producing a protein-rich lupin flour, said process comprising the successive steps of :
a) washing a lupin flour by mixing it with an acidic aqueous liquid, and adjusting the pH below 6, to obtain a aqueous-washed lupin flour; and
b) washing said aqueous-washed lupin flour by mixing it with an alcohol at least one time, to obtain an alcohol-washed lupin flour.

2. The process according to Claim 1, wherein said alcohol is 96% ethanol.

3. The process according to Claim 1 or 2, wherein the alcohol washing step b) is carried out more than once, preferably twice, and more preferably only twice.

4. The process according to any one of Claims 1 to 3, wherein said lupin flour is a flour of at least partially dehulled lupin bean and/or lupin kernels.

5. The process according to any one of Claims 1 to 4, wherein no hexane is used.

6. The process according to any one of Claims 1 to 5, wherein said process includes a drying step of said alcohol-washed lupin flour.

7. The process according to anyone of Claims 1 to 6, wherein the alcohol washing step b) is carried out in a liquid, and is carried twice, and wherein the second alcohol washing step is carried out in a liquid having an alcohol concentration which is higher that the alcohol concentration of the liquid of the first alcohol washing step.

8. A protein-rich lupin flour, wherein said protein-rich lupin flour comprises at least 45% DM w/w of proteins and at least 20% DM w/w of total fibres and has a white or off white colour determined in the colour space CIELAB (1976) by a b* value of less than 18, preferably less than 17.4, preferably less than 15.0 and more preferably less than 12.0.

9. The protein-rich lupin as claimed in Claim 8, wherein said colour has a Lightness L* value superior to 91.0, more preferably superior to 92.0.

10. The protein-rich lupin flour according to Claim 8 or 9, wherein said flour comprises from 45% to 58% w/w of protein on a dry matter basis, preferably from 48% to 55% w/w of protein on a dry matter basis.

11. The protein lupin flour according to any one of Claims 8 to 10, wherein said protein-rich lupin flour comprises less than 5% (w/w) fat on dry matter basis, preferably from 0.1% to 4% (w/w) fat on a dry matter basis.

12. The protein-rich lupin flour according to any one of Claims 8 to 11, wherein said flour has a water holding capacity (WHC) per gram of flour, of at least 2.5 g/g, preferably from 2.6 g/g to 7.0 g/g, in particular from 2.8 g/g to 4.5 g/g, more particularly from 2.9 g/g to 3.5 g/g of flour.

13. The protein-rich lupin flour according to any one of Claims 8 to 12, wherein said flour has amount of total fibres of at least 20% DM (w/w), preferably of at least 30% DM (w/w), more preferably of at least 32% DM (w/w) and even more preferably of at least 36% DM (w/w).

14. The protein-rich lupin flour of any one of Claims 8 to 13, wherein said protein-rich lupin flour is obtained, or obtainable, by the process of anyone of Claims 1 to 7

15. Use of the protein-rich lupin flour according to any one of Claims 8 to 14, for preparing a food product, or a feed, for human or animal consumption.
